# FASCICULE DE BREVET EUROPEEN

(11) **EP 1 605 151 B1**
(45) Date de publication et mention de la délivrance du brevet: **02.11.2016**
(21) Numéro de dépôt: 05300459.4
(22) Date de dépôt: 07.06.2005
(51) Int. Cl.: F02D 41/40

(54) **Procédé d'injection pour moteur**
Einspritzungsverfahren für eine Brennkraftmaschine
Injection method for an internal combustion engine

(30) Priorité: 07.06.2004 FR 0406134
(43) Date de publication de la demande: 14.12.2005
(73) Titulaire: Renault s.a.s., 92100 Boulogne Billancourt (FR)
(72) Inventeur: Cruchet, Jérôme, 91650 Breuillet (FR); Fiette, Sébastien, 91260, Juvisy sur Orge (FR); Ganivet, Jean-Philippe, 92120, Montrouge (FR); Lafon, Patrick, 92170, Vanves (FR)
(74) Mandataire: Rougemont, Bernard

(56) Documents cités:
- EP-A- 0 409 247
- FR-A- 2 840 649
- US-A- 5 502 966

## Description

La présente invention concerne, de façon générale, un procédé d'injection de carburant pour moteur à combustion interne afin d'optimiser les performances d'un tel moteur sur-alimenté lorsque certaines conditions imposent de limiter un niveau de sur-alimentation du moteur par rapport à un niveau de sur-alimentation théoriquement admissible par le moteur pour un point de fonctionnement donné.

Plus particulièrement, l'invention concerne un procédé de contrôle d'injection pour moteur à combustion interne tel qu'un moteur diesel comportant :
- une chambre de combustion ;
- des moyens d'injection de carburant pour injecter du carburant dans la chambre ;
- un turbocompresseur adapté pour compresser un comburant tel que de l'air dans la chambre ;
- des moyens de commande des moyens d'injection ;
le procédé comportant :
- une étape de collecte de paramètres d'état du moteur pour déterminer un point de fonctionnement moteur sur une période de fonctionnement moteur donnée ;
- une étape détermination d'un niveau de sur-alimentation courant du moteur en comburant pour ladite période de fonctionnement donnée;
- une étape de détermination d'une consigne d'avance d'injection applicable pour un ou plusieurs cycles moteur postérieurs à la période de fonctionnement donnée.

Les turbocompresseurs de moteurs tels que des moteurs diesels permettent de sur-alimenter en comburant chaque chambre de combustion du moteur, c'est à dire de compresser le comburant sous une pression supérieure à la pression atmosphérique, comme décrit dans le document FR 2 840 649.

Les performances maximales d'un moteur sur-alimenté en pleine charge sont principalement limitées par deux limites physiques :
- la pression maximale admissible à l'intérieur de la chambre et
- la température avant turbine maximale admissible par le turbocompresseur.

Les réglages de la pleine charge sont optimisés dans des conditions nominales de fonctionnement afin d'exploiter au maximum les capacités du moteur.

Certaines contraintes telles que la survitesse du turbocompresseur, le pompage turbo, la température avant turbine maximale imposent de diminuer le niveau de sur-alimentation par rapport aux conditions nominales en fonction de paramètres tels que la contre-pression d'échappement, la température de l'air ambiant, la pression atmosphérique, qui peuvent varier par rapport aux conditions nominales. La diminution du niveau de sur-alimentation entraîne une diminution du couple en pleine charge et de la puissance mécanique produite par le moteur en pleine charge.

La diminution du niveau de sur-alimentation entraîne une diminution des performances en pleine charge du moteur par rapport à son potentiel de puissance théorique et à ses limites mécaniques. La diminution de pression à l'intérieur de la chambre associée à la diminution du niveau de sur-alimentation offre une marge de gain de puissance moteur par rapport aux limites mécaniques admissibles par ce dernier.

Dans ce contexte, la présente invention a pour but de proposer un procédé de contrôle d'injection permettant un gain de puissance moteur, lorsque le niveau de sur-alimentation courant du moteur est un facteur limitant les performances moteur.

A cette fin, le procédé d'injection de l'invention, par ailleurs conforme à la définition générique qu'en donne le préambule défini précédemment, est essentiellement caractérisé en ce qu'il comporte :
- une étape de collecte dans une base de donnée préenregistrée, d'une information de niveau de sur-alimentation théorique correspondant au point de fonctionnement moteur déterminé ;
- et en ce que la consigne d'avance d'injection pour le ou les cycles moteur postérieurs à la période de fonctionnement donnée est déterminée en fonction d'une valeur d'écart entre le niveau de sur-alimentation courant et le niveau de sur-alimentation théorique.

Grâce à l'invention, il est donc possible d'augmenter les performances du moteur ayant un niveau de sur-alimentation courant inférieur à un niveau de sur-alimentation théorique préalablement mesuré sur banc d'essai moteur, en faisant varier la consigne d'avance d'injection en fonction de l'écart entre les niveaux de sur-alimentations théorique et courant. Plus particulièrement cette avance d'injection est augmentée lorsque l'écart de niveau augmente.

L'invention permet donc d'exploiter au mieux les capacités mécaniques du moteur, même lorsque celui-ci n'est pas sur-alimenté de façon optimale et cela :
- sans avoir à distinguer la cause de la diminution du niveau de sur-alimentation
- et quelles que soient les limites rencontrées par la sur-alimentation.

Il est à noter que la période durant laquelle sont collectés les paramètres correspond par exemple à un ou plusieurs cycles moteur.

D'autre part, la consigne d'avance détermine le moment théorique auquel devra se produire l'injection de carburant et/ou de comburant ce moment étant généralement exprimé en angle de rotation du vilebrequin par rapport à un point mort haut moteur ou en écart de temps par rapport à ce point mort haut moteur, cette dernière valeur étant liée au régime moteur courant.

On peut par exemple faire en sorte que les paramètres d'état du moteur collectés pour déterminer ledit point de fonctionnement moteur soient au moins la charge et le régime moteur.

Les paramètres de charge et de régime moteur sont choisis en particulier car ils donnent une excellente image du point de fonctionnement du moteur mais aussi parce qu'il s'agit de paramètres normalement mesurés ou évalués par les moyens de commande d'injection de nombreux véhicules existants. La présente invention peut donc être mise en oeuvre sans avoir à installer impérativement de nouveaux capteurs sur le moteur.

On peut également faire en sorte que le paramètre de charge moteur corresponde :
- soit à une consigne de charge à développer donnée au moteur par les moyens de commande d'injection ;
- soit à un paramètre collecté à l'aide d'un capteur de débit de carburant injecté et/ou un capteur de puissance mécanique produite par le moteur et/ou un capteur de couple moteur.

Lorsque le paramètre de charge utilisé dans le procédé d'injection selon l'invention est la consigne de charge à développer, il n'est pas nécessaire d'effectuer une mesure particulière de la charge. Dans ce cas la consigne de charge est considérée comme représentative de la charge courante réelle du moteur.

Lorsque le paramètre de charge utilisé dans le procédé selon l'invention est mesuré à l'aide de capteurs, l'approximation du paramètre de charge courante réelle est réduite à son minimum et dépend uniquement de la qualité de la mesure.

On peut également faire en sorte que la collecte des paramètres d'état du moteur soit réalisée à l'aide d'au moins un capteur de type tachymètre mesurant le régime moteur, c'est à dire sa vitesse de rotation.

Il est également possible de prévoir que le niveau de sur-alimentation courant soit :
- mesuré à l'aide d'un capteur de pression mesurant une pression de comburant à une sortie du turbocompresseur adaptée pour alimenter ladite chambre en comburant,
- ou calculé à l'aide d'une table de données en fonction de paramètres d'environnement moteur tels que la température ambiante et/ou la pression atmosphérique et en fonction des paramètres d'état du moteur.

D'autres caractéristiques et avantages de l'invention ressortiront clairement de la description qui en est faite ci-après, à titre indicatif et nullement limitatif, en référence aux dessins annexés, dans lesquels:
la figure 1 représente des courbes de performances moteur obtenues avec et sans la mise en oeuvre du procédé selon l'invention et mettant ainsi en évidence les gains de performance moteur autorisés par l'invention ;
la figure 2 représente un schémas logique de stratégie de contrôle moteur permettant de déterminer un niveau de sur-alimentation courant moteur qui, en l'occurrence, est la consigne de sur-alimentation courante ;
la figure 3 représente un schémas logique de stratégie de contrôle moteur mettant en oeuvre le procédé selon l'invention, permettant de déterminer l'avance moteur en fonction de l'écart entre le niveau de sur-alimentation courant et le niveau de sur-alimentation théorique (aussi appelé niveau de sur-alimentation nominal).

Comme annoncé précédemment, l'invention concerne un procédé d'injection pour moteur particulièrement adapté pour être mis en oeuvre sur des moteurs de type turbo-diesel.

Le procédé selon l'invention s'applique particulièrement à un moteur comportant au moins une chambre de combustion, des moyens d'injection de carburant pour injecter du carburant dans la chambre, un turbocompresseur adapté pour compresser un comburant tel que de l'air dans la chambre et des moyens de commande des moyens d'injection.

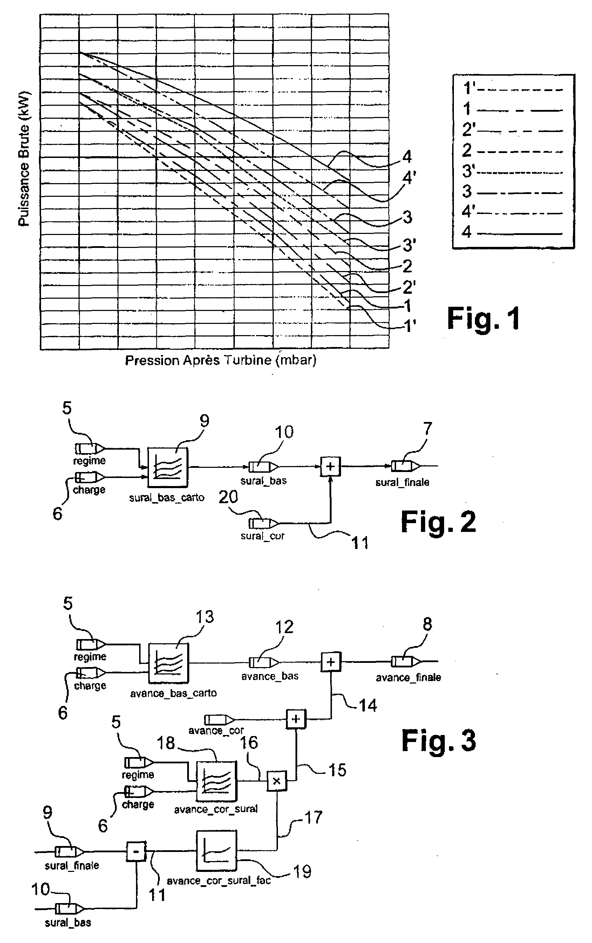

La figure 1 représente un graphique de mesures dont l'axe des abscisses est la pression après turbine exprimée en millibars et dont l'axe des ordonnées représente la puissance brute fournie par le moteur.

Les courbes 1 et 1', 2 et 2', 3 et 3', 4 et 4' représentent respectivement quatre séries de mesures de performances moteur (puissance brute en kilo watt) en fonction de l'augmentation de la contre-pression d'échappement (la pression mesurée après turbine du turbocompresseur exprimée en mbars) qui est un facteur limitatif de la puissance et qui impose une baisse de la pression de sur-alimentation par rapport à un niveau de sur-alimentation théorique nominal.

Les courbes 1 et 1' sont mesurées sur un moteur dont la pression maximale avant turbine de turbocompresseur est limitée volontairement à 3, 8 bars.

Les courbes 2 et 2' sont mesurées sur un moteur dont la pression maximale avant turbine de turbocompresseur est limitée volontairement à 3, 9 bars.

Les courbes 3 et 3' sont mesurées sur un moteur dont la pression maximale avant turbine de turbocompresseur est limitée volontairement à 4 bars.

Les courbes 4 et 4' sont mesurées sur un moteur dont la pression maximale avant turbine de turbocompresseur est limitée volontairement à 4,2 bars.

Les courbes en traits discontinus numérotées 1', 2', 3' et 4' sont des courbes de comportement moteur sans mise en oeuvre du procédé selon l'invention.

Les courbes en traits continus numérotées 1, 2, 3 et 4 sont des courbes de comportement moteur avec mise en oeuvre du procédé selon l'invention.

D'après cette figure 1 on s'aperçoit que plus le niveau maximum de pression avant turbine est réglé bas et plus la puissance brute fournie par le moteur sera faible.

D'autre part, pour chacun des quatre cas comparatifs 1, 1', 2, 2', 3,3' et 4,4', on s'aperçoit que plus la pression avant turbine augmente et plus l'invention est avantageuse et permet de limiter la baisse de performance moteur par rapport à ce quelle serait sur un moteur sans mise en oeuvre de l'invention.

La figure 2 représente un moyen de détermination du niveau de sur-alimentation courant. Dans ce cas, l'information de niveau de sur-alimentation courant 7 utilisée est la consigne gérée par les moyens de commande des moyens d'injection. Dans ce cas il est considérée que cette consigne 7 est suffisamment proche de la valeur réelle de niveau de sur-alimentation courant 7 pour qu'elle y soit assimilée. Ce mode de réalisation particulier permet d'économiser une mesure spécifique du niveau de sur-alimentation courant par des capteurs permettant ainsi de réduire le coût de mise en oeuvre du procédé selon l'invention.

Les moyens de commande d'injection non représentés sur les figures comportent un moyen de calcul du type processeur, alimenté électriquement par une alimentation embarquée et au moins une mémoire pour stocker des données, des valeurs, des consignes et des résultats de calculs. Ces moyens de commande d'injection comportent également des capteurs et des organes effecteurs tels que des vannes permettant de contrôler l'injection de carburant et de comburant dans la chambre.

Le niveau de sur-alimentation courant 7 est obtenu en additionnant une valeur 10 ou niveau de sur-alimentation théorique 10 issue d'une base de données préenregistrée 9 avec une valeur de correction de la suralimentation 20. La base de données préenregistrée 9 est une table dans laquelle sont enregistrés pour chaque point de fonctionnement moteur donné un niveau de sur-alimentation théorique 10.
Le point de fonctionnement mesuré par capteur est en l'occurrence défini par le régime moteur et la charge.

Il est à noter que la valeur de correction de la sur-alimentation 20 est une valeur dépendante de nombreux facteurs tels que la température de l'eau du véhicule, la température ambiante de l'air, la pression atmosphérique. Cette correction 20 est utilisée comme une information brute sans en analyser les causes de variations qui sont extrêmement complexes. Grâce au procédé selon l'invention il est maintenant possible d'optimiser les performances moteur sans avoir à tenir compte de ces causes de variation complexes. Il est à noter que la correction de la sur-alimentation 20 est déterminée par un ou plusieurs calculateurs et est égale à la valeur d'écart 11 représentée sur les figures 2 et 3.

La figure 3 décrit le processus d'obtention de la consigne d'avance d'injection 8.
Cette consigne d'avance d'injection 8 est déterminée en additionnant :
- une valeur d'avance de base 12 issue d'une base de données cartographiées d'avance de base 13 dans laquelle, pour un point de fonctionnement moteur donné, correspond une seule valeur d'avance de base 12 ;
- et une valeur de correction d'avance calculée 14.

La valeur de correction d'avance calculée 14 est obtenue par une étape de calcul d'une valeur intermédiaire de correction d'avance 15. La valeur intermédiaire de correction d'avance 15 est elle même obtenue par multiplication :
- d'une valeur de correction d'avance maximale théoriquement admissible 16, qui est mémorisée dans une base de données cartographiées 18 ;
- par un coefficient multiplicatif 17 qui est une valeur numérique comprise entre 0 et 1.

Ainsi pour un coefficient 17 égal à 0, la valeur intermédiaire de correction d'avance 15 sera nulle. Pour pour un coefficient 17 égal à 1, la valeur intermédiaire de correction d'avance 15 sera maximale.

La valeur de correction d'avance maximale théoriquement admissible 16 est issue d'une base de données cartographiées de correction d'avance maximale 18 dans laquelle pour un point de fonctionnement moteur donné correspond une seule valeur de correction d'avance maximale théorique 16.

Il est à noter que les valeurs issues des bases de données cartographiées sont des valeurs préenregistrées dans des mémoires appartenant aux moyens de commande des moyens d'injection, à l'issue des tests moteur effectués sur bancs d'essais.

Le coefficient multiplicatif 17 est déterminé en fonction de la valeur d'écart 11 entre le niveau de sur-alimentation courant 7 et le niveau de sur-alimentation théorique 10, c'est à dire en fonction de la valeur de correction de la sur-alimentation 20 de la figure 2.
Ce coefficient 17 provient soit d'une base de données cartographiées de coefficients 19 comme représenté sur l'exemple de la figure 2, soit d'une fonction de calcul telle qu'une fonction bijective.
Par exemple le coefficient 17 peut être proportionnel à la valeur d'écart 11.

Avantageusement, le procédé selon l'invention comporte une étape de limitation de la consigne d'avance d'injection adaptée pour que ladite consigne d'avance d'injection 8 soit comprise, pour chaque point de fonctionnement moteur déterminé, entre des consignes d'avances minimale et maximale définies en fonction dudit point de fonctionnement.

Cette étape de limitation de la consigne d'avance 8 permet d'éviter un risque d'emballement ou de perte de puissance du moteur en fixant une plage d'avance admissible pour chaque point de fonctionnement moteur. Chaque plage d'avance admissible et le ou les points de fonctionnement moteur correspondants sont préférentiellement stockés dans une base de données cartographiées prédéterminée lors d'essais du moteur sur banc.
L'invention concerne enfin un moteur pour la mise en oeuvre du procédé selon l'invention.

## Revendications

1. Procédé de contrôle d'injection pour moteur à combustion interne tel qu'un moteur diesel comportant :
- une chambre de combustion ;
- des moyens d'injection de carburant pour injecter du carburant dans la chambre ;
- un turbocompresseur adapté pour compresser un comburant tel que de l'air dans la chambre ;
- des moyens de commande des moyens d'injection ;
le procédé comportant :
- une étape de collecte de paramètres d'état du moteur pour déterminer un point de fonctionnement moteur sur une période de fonctionnement moteur donnée;
- une étape de détermination d'un niveau de sur-alimentation courant du moteur en comburant pour ladite période de fonctionnement donnée ;
- une étape de détermination d'une consigne d'avance d'injection applicable pour un ou plusieurs cycles moteur postérieurs à la période de fonctionnement donnée ;
**caractérisé :**
- **en ce qu'**il comporte une étape de collecte dans une base de données préenregistrées, d'une information de niveau de sur-alimentation théorique admissible par le moteur pour un point de fonctionnement donné, correspondant au point de fonctionnement moteur déterminé ;
- et **en ce que** la consigne d'avance d'injection pour le ou les cycles moteur postérieurs à la période de fonctionnement donnée est déterminée en fonction d'une valeur d'écart entre le niveau de sur-alimentation courant et le niveau de sur-alimentation théorique.

2. Procédé de contrôle d'injection selon la revendication 1 **caractérisé en ce que** les paramètres d'état du moteur collectés pour déterminer ledit point de fonctionnement moteur sont au moins la charge et le régime moteur.

3. Procédé de contrôle d'injection selon la revendication 2 **caractérisé en ce que** le paramètre de charge moteur correspond :
- soit à une consigne de charge à développer donnée au moteur par les moyens de commande d'injection
- soit à un paramètre collecté à l'aide d'un capteur de débit de carburant injecté et/ou un capteur de puissance mécanique produite par le moteur et/ou un capteur de couple moteur.

4. Procédé de contrôle d'injection selon l'une au moins des revendications 1 à 3 **caractérisé en ce que** la collecte des paramètres d'état du moteur est réalisée à l'aide d'au moins un capteur de type tachymètre mesurant le régime moteur.

5. Procédé de contrôle d'injection selon l'une au moins des revendications 1 à 4 **caractérisé en ce que** le niveau de sur-alimentation courant est :
- soit mesuré à l'aide d'un capteur de pression mesurant une pression de comburant à une sortie du turbocompresseur adaptée pour alimenter ladite chambre en comburant,
- soit calculé à l'aide d'une table de données en fonction de paramètres d'environnement moteur tels que la température ambiante et/ou la pression atmosphérique et en fonction des paramètres d'état du moteur.

6. Procédé de contrôle d'injection selon l'une au moins des revendications 1 à 5 **caractérisé en ce que** la consigne d'avance d'injection est déterminée en additionnant :
- une valeur d'avance de base (12) issue d'une base de données cartographiées d'avance de base (13) dans laquelle pour un point de fonctionnement moteur donné correspond une seule valeur d'avance de base (12) ;
- et une valeur de correction d'avance calculée (14).

7. Procédé de contrôle d'injection selon la revendication 6 **caractérisé en ce que** la valeur de correction d'avance calculée (14) est obtenue par une étape de calcul d'une valeur intermédiaire de correction d'avance (15) elle même obtenue par multiplication :
- d'une valeur de correction d'avance maximale théoriquement admissible (16) ;
- par un coefficient multiplicatif (17) qui est une valeur numérique comprise entre 0 et 1.

8. Procédé de contrôle d'injection selon la revendications 7 **caractérisé en ce que** la valeur de correction d'avance maximale théoriquement admissible (16) est issue d'une base de données cartographiées d'avance maximale (18) dans laquelle pour un point de fonctionnement moteur donné correspond une seule valeur de correction d'avance maximale théorique (16).

9. Procédé de contrôle d'injection selon l'une des revendications 7 ou 8 **caractérisé en ce que** le coefficient multiplicatif (17) est fonction de la valeur d'écart (11) entre le niveau de sur-alimentation courant (7) et le niveau de sur-alimentation théorique (10), ce coefficient (17) provenant soit d'une base de données cartographiées de coefficients (19), soit d'une fonction de calcul telle qu'une fonction bijective.

10. Procédé de contrôle d'injection selon l'une des revendications 1 ou 9 **caractérisé en ce qu'**il comporte une étape de limitation de la consigne d'avance d'injection adaptée pour que ladite consigne d'avance d'injection (8) soit comprise, pour chaque point de fonctionnement moteur déterminé, entre des consignes d'avance minimale et maximale définies en fonction dudit point de fonctionnement.

## Patentansprüche

1. Verfahren zur Einspritzungssteuerung für Brennkraftmaschine wie einen Dieselmotor, aufweisend:
- einen Brennraum;
- Kraftstoffeinspritzmittel, um Kraftstoff in den Raum einzuspritzen;
- einen Turbokompressor, der angepasst ist, um ein Verbrennungsmittel wie Luft in dem Raum zu verdichten;
- Mittel zur Steuerung der Einspritzmittel;
wobei das Verfahren aufweist:
- einen Schritt der Sammlung von Zustandsparametern des Motors, um einen Motorbetriebspunkt in einem gegebenen Motorbetriebszeitraum zu bestimmen;
- einen Schritt der Bestimmung eines aktuellen Aufladungsniveaus des Motors mit Verbrennungsmittel für den genannten gegebenen Betriebszeitraum;
- einen Schritt der Bestimmung einer Einspritzungsvorverstellungsvorgabe, die für einen oder mehrere Motorzyklen nach dem gegebenen Betriebszeitraum anwendbar ist;
**dadurch gekennzeichnet:**
- **dass** es einen Schritt der Sammlung in einer Datenbank mit vorgespeicherten Daten einer Information eines durch den Motor für einen gegebenen Betriebspunkt zulässigen theoretischen Aufladungsniveaus, das dem bestimmten Motorbetriebspunkt entspricht, aufweist;
- und **dass** die Einspritzungsvorverstellungsvorgabe für den oder die Motorzyklen nach dem gegebenen Betriebszeitraum abhängig von einem Abweichungswert zwischen dem aktuellen Aufladungsniveau und dem theoretischen Aufladungsniveau bestimmt wird.

2. Verfahren zur Einspritzungssteuerung nach Anspruch 1, **dadurch gekennzeichnet, dass** die gesammelten Zustandsparameter des Motors zur Bestimmung des genannten Motorbetriebspunkts mindestens die Motorlast und die Motordrehzahl sind.

3. Verfahren zur Einspritzungssteuerung nach Anspruch 2, **dadurch gekennzeichnet, dass** der Motorlastparameter entspricht:
- entweder einer Vorgabe der zu entwickelnden Last, die dem Motor durch die Mittel zur Steuerung der Einspritzung gegeben wird
- oder einem mithilfe eines Sensors der Durchflussmenge des eingespritzten Kraftstoffs und/oder eines Sensors der durch den Motor produzierten mechanischen Leistung und/oder eines Sensors des Motordrehmoments gesammelten Parameter.

4. Verfahren zur Einspritzungssteuerung nach mindestens einem der Ansprüche 1 bis 3, **dadurch gekennzeichnet, dass** die Sammlung der Zustandsparameter des Motors mithilfe mindestens eines Sensors vom Typ Tachometer, der die Motordrehzahl misst, realisiert wird.

5. Verfahren zur Einspritzungssteuerung nach mindestens einem der Ansprüche 1 bis 4, **dadurch gekennzeichnet, dass** das aktuelle Aufladungsniveau:
- entweder mithilfe eines Drucksensors gemessen wird, der einen Verbrennungsmitteldruck an einem Ausgang des Turbokompressors, der angepasst ist, um den genannten Raum mit Verbrennungsmittel zu versorgen, misst,
- oder mithilfe einer Datentabelle abhängig von Motorumgebungsparametern wie der Umgebungstemperatur und/oder dem atmosphärischen Druck und abhängig von den Zustandsparametern des Motors berechnet wird.

6. Verfahren zur Einspritzungssteuerung nach mindestens einem der Ansprüche 1 bis 5, **dadurch gekennzeichnet, dass** die Einspritzungsvorverstellungsvorgabe bestimmt wird durch Addieren:
- eines Basisvorverstellungswerts (12) aus einer Datenbank von Kennfelddaten der Basisvorverstellung (13), in der für einen gegebenen Motorbetriebspunkt nur ein Basisvorverstellungswert (12) zugeordnet ist;
- und eines berechneten Vorverstellungskorrekturwerts (14).

7. Verfahren zur Einspritzungssteuerung nach Anspruch 6, **dadurch gekennzeichnet, dass** der berechnete Vorverstellungskorrekturwert (14) durch einen Schritt der Berechnung eines Vorverstellungskorrekturzwischenwerts (15) erhalten wird, der wiederum erhalten wird durch Multiplikation:
- eines Korrekturwerts einer theoretisch zulässigen maximalen Vorverstellung (16);
- mit einem Multiplikationskoeffizienten (17), der ein numerischer Wert zwischen 0 und 1 ist.

8. Verfahren zur Einspritzungssteuerung nach Anspruch 7, **dadurch gekennzeichnet, dass** der Korrekturwert einer theoretisch zulässigen maximalen Vorverstellung (16) aus einer Datenbank von Kennfelddaten der maximalen Vorverstellung (18), in der für einen gegebenen Motorbetriebspunkt nur ein Korrekturwert einer theoretischen maximalen Vorverstellung (16) zugeordnet ist.

9. Verfahren zur Einspritzungssteuerung nach einem der Ansprüche 7 oder 8, **dadurch gekennzeichnet, dass** der Multiplikationskoeffizient (17) vom Abweichungswert (11) zwischen dem aktuellen Aufladungsniveau (7) und dem theoretischen Aufladungsniveau (10) abhängig ist, wobei dieser Koeffizient (17) entweder aus einer Datenbank mit Kennfelddaten von Koeffizienten (19), oder aus einer Berechnungsfunktion wie einer bijektiven Funktion stammt.

10. Verfahren zur Einspritzungssteuerung nach einem der Ansprüche 1 oder 9, **dadurch gekennzeichnet, dass** es einen Schritt der Begrenzung der Einspritzungsvorverstellungsvorgabe aufweist, der angepasst ist, damit die genannte Einspritzungsvorverstellungsvorgabe (8), für jeden bestimmten Motorbetriebspunkt, zwischen Vorgaben einer minimalen und maximalen Vorverstellung, die abhängig vom genannten Betriebspunkt definiert sind, liegt.

## Claims

1. Injection control method for an internal combustion engine such as a diesel engine, comprising:
- a combustion chamber;
- fuel injection means for injecting fuel into the chamber;
- a turbocharger designed to compress an oxidant such as air in the chamber;
- means for controlling the injection means;
the method comprising:
- a step of collecting engine status parameters in order to determine an engine operating point over a given engine operating period;
- a step of determining a current level of engine supercharging with oxidant for the said given operating period;
- a step of determining an injection advance reference applicable to one or more engine cycles subsequent to the given operating period; **characterized:**
- **in that** it comprises a step of collecting, in a database of prerecorded data, a data item regarding the theoretical level of supercharging admissible by the engine for a given operating point, corresponding to the determined engine operating point;
- and **in that** the injection advance reference for the engine cycle or cycles subsequent to the given operating period is determined as a function of the value of a difference between the current level of supercharging and the theoretical level of supercharging.

2. Injection control method according to Claim 1, **characterized in that** the engine status parameters collected in order to determine the said engine operating point are at least engine speed and engine load.

3. Injection control method according to Claim 2, **characterized in that** the engine load parameter corresponds:
- either to a reference load to be developed and given to the engine by the injection control means
- or to a parameter collected using an injected fuel delivery sensor and/or a sensor of the mechanical power produced by the engine and/or an engine torque sensor.

4. Injection control method according to at least one of Claims 1 to 3, **characterized in that** the engine status parameters are collected using at least one sensor of the tachymeter type that measures engine speed.

5. Injection control method according to at least one of Claims 1 to 4 **characterized in that** the current level of supercharging is:
- either measured using a pressure sensor that measures an oxidant pressure at an outlet from the turbocharger, which pressure is suited to supplying the said chamber with oxidant,
- or calculated using a look-up table of data as a function of engine environment parameters such as the ambient temperature and/or the atmospheric pressure and as a function of the engine status parameters.

6. Injection control method according to at least one of Claims 1 to 5, **characterized in that** the injection advance reference is determined by summing:
- a basic-advance value (12) from a basic-advance mapped-data database (13) in which a single basic-advance value (12) corresponds to a given engine operating point;
- and a calculated advance-correction value (14).

7. Injection control method according to Claim 6, **characterized in that** the calculated advance-correction value (14) is obtained by a step of calculating an intermediate advance-correction value (15) itself obtained by multiplying together:
- a maximum theoretically admissible advance-correction value (16);
- and a multiplicative coefficient (17) which is a numerical value comprised between 0 and 1.

8. Injection control method according to Claim 7, **characterized in that** the maximum theoretically admissible advance-correction value (16) is derived from a maximum-advance mapped-data database (18) in which a single theoretical maximum advance-correction value (16) corresponds to a given engine operating point.

9. Injection control method according to one of Claims 7 and 8, **characterized in that** the multiplicative coefficient (17) is a function of the value of the difference (11) between the current level of supercharging (7) and the theoretical level of supercharging (10), this coefficient (17) being derived either from a mapped coefficient database (19) or from a calculation function such as a one-to-one function.

10. Injection control method according to one of Claims 1 and 9, **characterized in that** it comprises a step limiting the injection advance reference which is designed so that the said injection advance reference (8) is comprised, for each determined engine operating point, between minimum and maximum advance references defined as a function of the said operating point.
